# EUROPEAN PATENT SPECIFICATION

(11) **EP 3 264 229 B1**
(45) Date of publication and mention of the grant of the patent: **23.09.2020**
(21) Application number: 17001006.0
(22) Date of filing: 14.06.2017
(51) Int. Cl.: G06F 3/01, G06F 3/0488

(54) **TERMINAL AND CONTROLLING METHOD THEREOF**
ENDGERÄT UND STEUERUNGSVERFAHREN DAFÜR
TERMINAL ET SON PROCÉDÉ DE COMMANDE

(30) Priority: 29.06.2016 KR 20160081396
(43) Date of publication of application: 03.01.2018
(73) Proprietor: LG Electronics Inc., Yeongdeungpo-Gu Seoul 07336 (KR)
(72) Inventor: LEE, Joowoo, 06772 Seoul (KR); KIM, Soomin, 06772 Seoul (KR); LEE, Juhyun, 06772 Seoul (KR); JUNG, Eunsoo, 06772 Seoul (KR)
(74) Representative: Beyer, Andreas

(56) References cited:
- EP-A1- 2 624 113
- WO-A2-2006/015236
- US-A1- 2009 153 468
- US-A1- 2010 103 103
- US-A1- 2013 120 224
- US-A1- 2013 139 093
- US-A1- 2013 328 927
- US-A1- 2015 212 647
- US-A1- 2015 258 432
- US-B1- 9 007 401

## Description

### BACKGROUND OF THE INVENTION

### Field of the Invention

The present invention relates to a terminal, and more particularly, to a terminal and controlling method thereof. Although the present invention is suitable for a wide scope of applications, it is particularly suitable for providing various input interfaces to a wearable device connected to the terminal.

### Discussion of the Related Art

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components.

Meanwhile, devices a user can wear are recently released like wearable devices.

Such a wearable device can be conveniently worn on a user body like a head mounted display wearable on a user's head, a watch type terminal wearable on a user's wrist and the like. Yet, such a wearable device may be inconvenient when in use.

In case of an input function such as a text input, since a wearable device has difficulty in providing a touchscreen enough to display a separate key or a virtual keyboard, it may cause a problem that the text input is not facilitated.

Particularly, in case of a head mounted display, since a display and a small number of physical keys are provided only, it is inconvenient that a considerable amount of operations are necessary for a text input.

US 2015/258432 A1 discloses a method for enhancing detection of a user's hand relative to a head-mounted display (HMD).

EP 2 624 113 A1 refers to an apparatus and a method of facilitating input at a second electronic device.

US 2013/139093 A1 discloses a display system includes a sensor unit that detects the position of a pointing object in contact with a predetermined object, a control apparatus that sets a key layout on the object and recognizes a key operated by the pointing object based on the position of the pointing object relative to the key layout, and a display apparatus that receives operational input from the operated key.

US 2009/153468 A1 relates to a virtual interface system, to a method of providing a virtual interface, and to a data storage medium having stored thereon computer code means for instructing a computer system to execute a method of providing a virtual interface.

US 2010/103103 A1 discloses a device and method for manual input of information into a computing device using a camera and visible touch sensors.

US 2013/328927 A1 discloses a system for generating a virtual gaming environment based on features identified within a real-world environment, and adapting the virtual gaming environment over time as the features identified within the real-world environment change.

US 2013/120224 A1 provides embodiments for recalibration of outward facing cameras supported by a see-through, head mounted, mixed reality display system.

US 9 007 401 B1 provides a method for controlling a head mounted display (HMD) with relation to an external device.

US 2015/212647 A1 relates to a head mounted display apparatus and a method for displaying a content.

WO 2006/015236 A2 discloses methods and apparatus for determining an object's three-dimensional location (i.e. real world coordinates) using the audio-video infrastructure of a 3G cellular phone or a 3C (Computer, Communications, Consumer) electronic device.

### SUMMARY OF THE INVENTION

Accordingly, embodiments of the present invention are directed to a terminal and controlling method thereof that substantially obviate one or more problems due to limitations and disadvantages of the related art.

One object of the present invention is to provide a terminal and controlling method thereof, by which various input devices are provided using the terminal connected to a wearable device.

Another object of the present invention is to provide a terminal and controlling method thereof, by which facilitating a text to be inputted to a screen displayed on a wearable device using an input to the terminal connected to the wearable device.

Additional advantages, objects, and features of the invention will be set forth in the disclosure herein as well as the accompanying drawings. Such aspects may also be appreciated by those skilled in the art based on the disclosure herein.

To achieve these objects and other advantages and in accordance with the purpose of the invention, a method of operating a terminal according to claim 1 is provided.

Further, a terminal according to claim 6 is provided.

Accordingly, embodiments of the present invention provide various effects and/or features.

First of all, a terminal according to an embodiment of the present invention can provide various input means capable of using various input interfaces displayed on a connected wearable device.

Secondly, the present invention enables a user to easily input a text to a screen displayed on a wearable device through an input to a terminal connected to a wearable device.

Therefore, although a wearable device is in use, the present invention enables a user to use various input devices through an input to a terminal and perform a text input quickly and easily.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the appended claims will become apparent to those skilled in the art from this detailed description.

### BRIEF DESCRIPTION OF THE DRAWINGS

FIG. 1A is a block diagram to describe a terminal related to the present invention;
FIG. 1B and FIG. 1C are diagrams for the concept of one example of a terminal related to the present invention in different views, respectively;
FIG. 2 is a block diagram for the configuration of a head mounted display according to one embodiment of the present invention;
FIG. 3 is a diagram for an exterior of a head mounted display according to one embodiment of the present invention;
FIG. 4 is a diagram for an example of a motion of a user wearing a head mounted display according to various embodiments of the present invention;
FIG. 5 is a flowchart for operations of a terminal and a head mounted display according to various embodiments of the present invention;
FIG. 6 is a diagram for an example of a connection between a terminal and a head mounted display according to one embodiment of the present invention;
FIG. 7 is a diagram for an example of displaying QWERTY keyboard interface according to various embodiments of the present invention;
FIG. 8 is a diagram for an example of displaying a matrix keypad interface according to various embodiments of the present invention;
FIG. 9 and FIG. 10 are diagrams for examples of a focus display according to various embodiments of the present invention;
FIG. 11 and FIG. 12 are diagrams for examples of a text input according to various embodiments of the present invention;
FIG. 13 is a diagram for an example of a path input according to various embodiments of the present invention;
FIG. 14 is a diagram for an example of a recommended word input according to various embodiments of the present invention;
FIG. 15 and FIG. 16 are diagrams for examples of a written input according to various embodiments of the present invention;
FIG. 17 is a diagram for an example of switching to a word selection input interface according to various embodiments of the present invention;
FIG. 18 is a diagram for an example of switching to a QWERTY keyboard interface according to various embodiments of the present invention;
FIG. 19 is a diagram for an example of switching to a matrix keypad interface according to various embodiments of the present invention;
FIG. 20 is a diagram for an example of switching to a QWERTY keyboard interface including an additional menu according to various embodiments of the present invention;
FIG. 21 is a diagram for an example of a written input according to various embodiments of the present invention;
FIG. 22 is a diagram for an example of switching an input interface according to various embodiments of the present invention;
FIG. 23 is a diagram for an example of an additional menu display according to various embodiments of the present invention;
FIG. 24 is a diagram for an example of a copy input according to various embodiments of the present invention;
FIG. 25 is a diagram for an example of a paste input according to various embodiments of the present invention;
FIG. 26 is a diagram for an example of an indicator display and shift according to various embodiments of the present invention;
FIG. 27 is a diagram for an example of capturing an image according to various embodiments of the present invention; and
FIG. 28 is a diagram for an example of copying a partial region of a 3D image according to various embodiments of the present invention.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

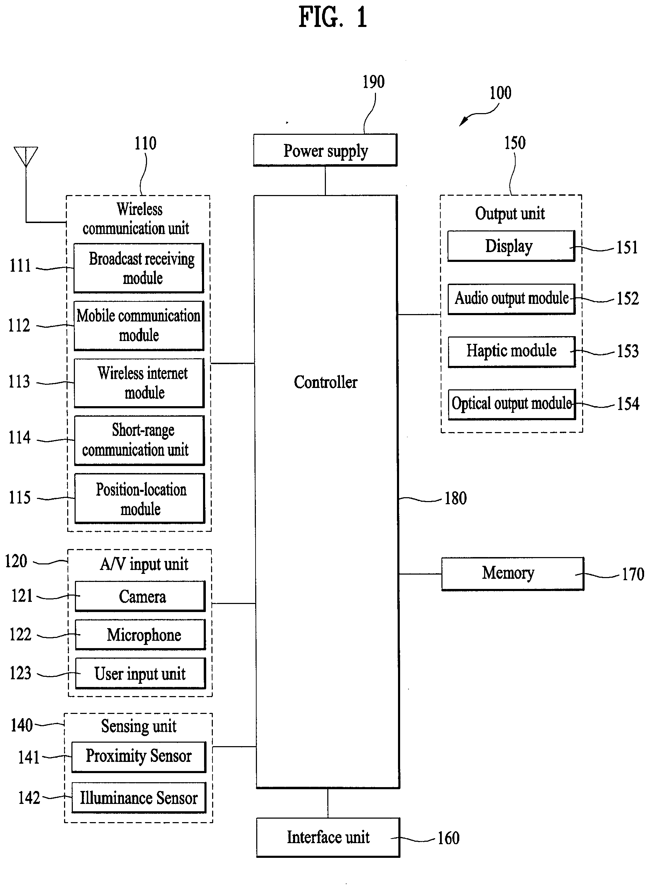

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The broadcast managing entity may be implemented using a server or system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this case, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

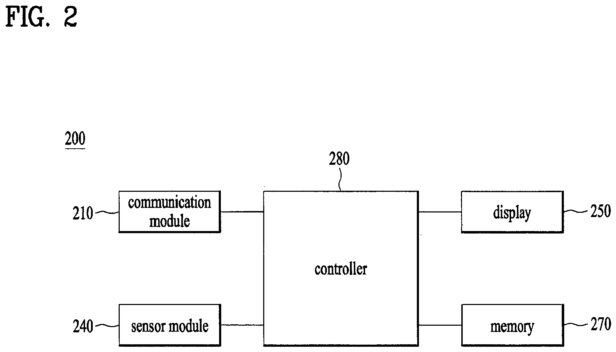

FIG. 2 is a block diagram to describe a head mounted display related to the present invention.

Referring to FIG. 2, a head mounted display 200 may include a communication module 210, a sensor module 240, a display 250, a memory 270 and a controller 280. Some of the components included in the head mounted display 200 may be removed or other components may be further included therein. The head mounted display 200 may include the former terminal 100, whereby some of the components of the former terminal 100 may be included in the head mounted display 200.

The communication module 210 may include at least one module capable of enabling a wired/wireless communication between the head mounted display 200 and a wireless/wired communication system, between the head mounted display 200 and the terminal 100, or between the head mounted display 200 and an external server. And, the communication module 210 may correspond to the former wireless communication unit 110.

The sensor module 240 may include at least one sensor configured to sense at least one of information in the head mounted display, surrounding environment information around the head mounted display and user information. For instance, the sensor module 240 may include at least one of a proximity sensor, an illumination sensor, a touch sensor, an acceleration sensor, a magnetic sensor, a gravity sensor (G-sensor), a gyroscope sensor, a motion sensor, an RGB, an IR (infrared) sensor, a finger scan sensor, an ultrasonic sensor, an optical sensor, a microphone, a battery gauge, an environment sensor(e.g., barometer, hygrometer, thermometer, radioactivity detecting sensor, heat detecting sensor, gas detecting sensor, etc.), a chemical sensor (e.g., e-nose, healthcare sensor, biometric sensor, etc.) and the like. Meanwhile, the head mounted display 200 disclosed in the present specification may utilize combinations of informations sensed by at least two of the above-listed sensors.

The sensor module 240 may sense various motions of the head mounted display 200. For instance, the sensor module 240 may sense a motion of a user currently wearing the head mounted display 200. Hence, the sensor module 240 may sense a motion of a head of the user currently wearing the head mounted display 200.

The display 250 may display (or output) information processed by the head mounted display 200. And, the display unit 251 may output an image transmitted from a terminal 100 connected to the head mounted display 200 by wire/wireless. For one example, the display 250 may output an image corresponding to augmented reality, virtual reality, or mixed reality. Hence, the head mounted display 200 be an open-view type enabling a user to view both a real object and a virtual reality image together or a closed-view type enabling a user to view a virtual reality image only.

The display 250 may output a 3D stereoscopic image.

The display 250 may include a lens, a projected plane, a projector and/or a prism. And, the display 250 may include a transparent display unit.

The display 250 may be configured to be disposed in front of eyes of a user wearing the head mounted display 200.

The display 250 may correspond to the former display 151.

The memory 270 can store data supportive of g various functions of the head mounted display 200. For instance, the memory 270 can store data related to an operation of the head mounted display 200 and data of a content outputted from the head mounted display 200. The memory 270 may correspond to the former memory 170.

The controller 280 may control an operation related to an application program and overall operations of the head mounted display 200. And, the controller 280 can control other components included in the head mounted display 200. For instance, the controller 280 can control other components included in the head mounted display 200 to output a transmitted image through the display 250. The controller 280 may launch various applications by processing data included in the head mounted display 200. The controller 280 may correspond to the former controller 180.

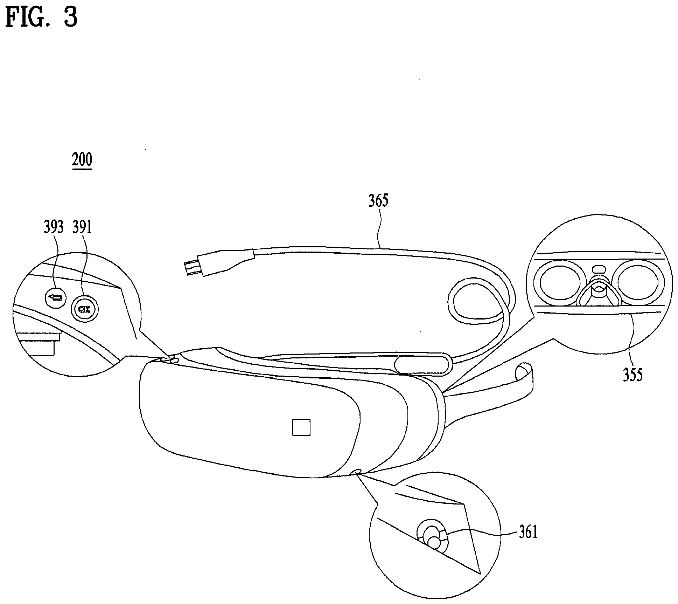

FIG. 3 shows a head mounted display according to one embodiment of the present invention.

Referring to FIG. 3, a head mounted display 200 may be a type of glasses to be worn on a user's head. The head mounted display 200 shown in FIG. 3 is one example only, and can be configured in such a head-wearable shape as a helmet type, a hat type, a goggle type or the like as well as in a glass type.

The head mounted display 200 may be provided with a lens 355 disposed at a position corresponding to user's eyes.

The lens 355 may include a left lens and a right lens, and at least one of locations and focuses of the left and right lenses are adjustable.

The head mounted display 200 may include an audio port 361 configured to transmit audio externally. Hence, an audio of a content outputted from the head mounted display 200 may be forwarded to an external device through the audio port 361.

The head mounted display 200 may include a cable 365 configured to connect to an external device. For one example, the head mounted display 200 may be connected to a terminal 100 through the cable 365. Hence, the head mounted display 200 may receive data of image and audio, which will be outputted, from the terminal 100 through the cable 365. And, the head mounted display 200 may be supplied with power from the connected terminal 100 through the cable 365. Cables of various specifications may be applicable to the cable 365. For instance, the cable 365 may include a USB (universal serial bus) cable or a capable supportive of independent specification.

The head mounted display 200 may include at least one key related to a function or operation. For instance, the head mounted display 200 may include a confirm button 391 and a previous button 393. The confirm button 391 may be a button for an input for a selection or decision, and the previous button 393 may be a button for an input of 'cancel' or 'backward'. Moreover, the confirm button 391 and the previous button 393 may include buttons for various input according to function or operations of the head mounted display 200 or buttons for various inputs according to launched applications.

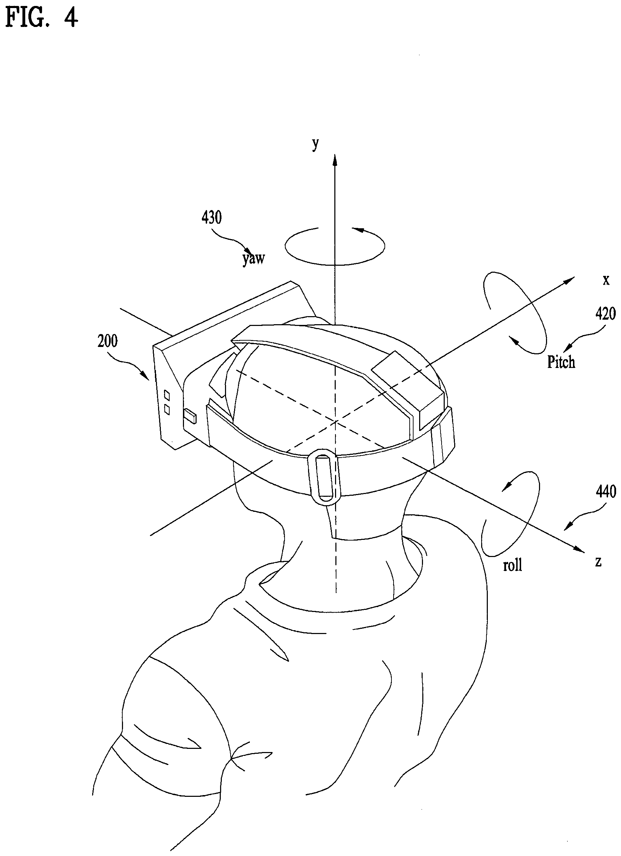

FIG. 4 is a diagram for an example of a motion of a user wearing a head mounted display according to various embodiments of the present invention.

Referring to FIG. 4, a motion of a user wearing a head mounted display 200 may be represented as a motion for a 3D center of each of a pitch 420, a yaw 430 and a roll 440 centering on a head of the user. In the 3D (3-dimensional) coordinate system, the pitch 420, the yaw 430 and the roll 440 may be an x-axis rotation, a y-axis rotation and a z-axis rotation, respectively. A sensor module 440 of the head mounted display 200 can sense a motion for each of the pitch 420, the yaw 430 and the roll 440. Hence, the controller 280 of the head mounted display 200 can recognize a motion of a user wearing the head mounted display 200.

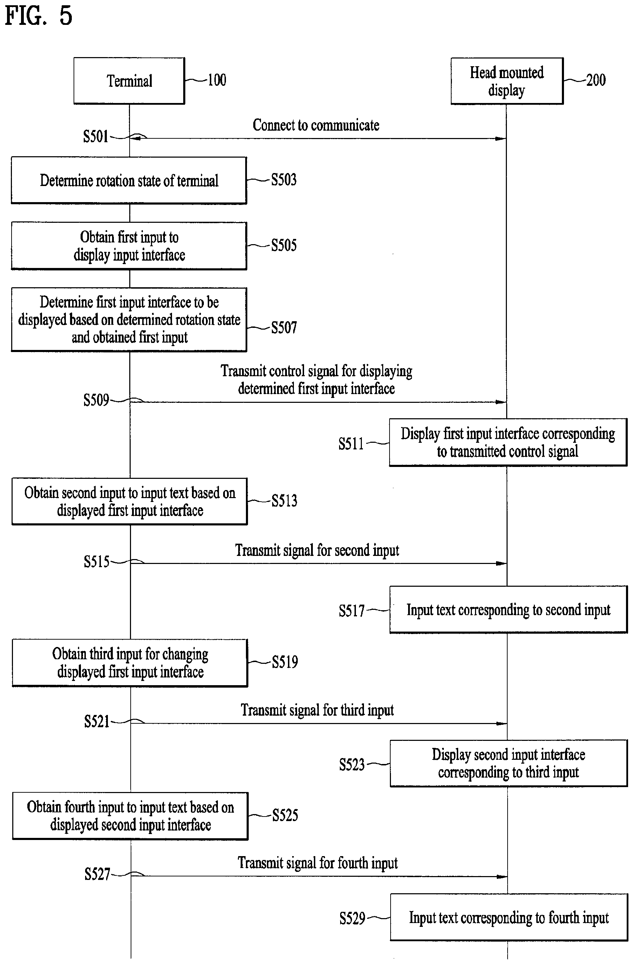

FIG. 5 is a flowchart for operations of a terminal and a head mounted display according to various embodiments of the present invention.

Referring to FIG. 5, the terminal 100 may establish a connection to communicate with the head mounted display 200 [S501].

For instance, the terminal 100 may establish a communication to communicate with the head mounted display 200 by wire or wireless. The terminal 100 may transmit video and audio of a content, which will be outputted by the head mounted display 200, to the connected head mounted display 200, and may also transmit a drive power of the head mounted display 200.

For one example, the terminal 100 may establish a connection to communicate with the head mounted display 200 by wire, and may be connected to the head mounted display 200 through at least one cable.

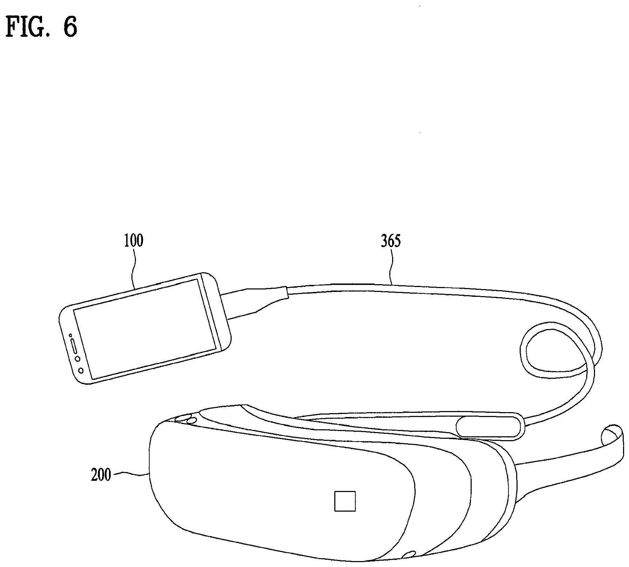

FIG. 6 is a diagram for an example of a connection between a terminal and a head mounted display according to one embodiment of the present invention.

Referring to FIG. 6, the terminal 100 may be connected to the head mounted display 200 through a cable 365. In this case, the cable 365 may include a component provided to the terminal 100 or the head mounted display 200, or a separate independent component. The terminal 100 may video and audio signals for a content, which will be outputted by the head mounted display 200, to the head mounted display 200, or may transmit a signal related to an operation or function of the head mounted display 200. And, the terminal 100 may receive a signal related to an operation or function of the terminal 100 from the head mounted display 200 through the cable 365. Moreover, the terminal may supply a power to the head mounted display 200 through the cable 365.

For another example, the terminal 100 may establish a connection to communicate with the head mounted display 200 by wireless, transmit video and audio signals for a content the head mounted display 200 will output, and transmit a signal related to an operation or function of the head mounted display 200. And, the terminal 100 may receive a signal related to an operation or function of the terminal 100 from the head mounted display 200 by wireless communication. Moreover, the terminal 100 may supply a power to the head mounted display 200 by a wireless power transmission scheme. In this case, the wireless communication and wireless power transmission scheme between the terminal 100 and the head mounted display 200 may employ various schemes or systems.

FIG. 5 is referred to again.

The terminal 100 may determine a rotation state of the terminal 100 [S503].

For instance, the controller 180 of the terminal may determine the rotation state of the terminal 100 based on a sensing value of the sensing unit 140.

In this case, the rotation state of the terminal 100 may mean a state that the terminal 100 is placed or a state that the terminal 100 is gripped. The rotation state of the terminal 100 may mean a display direction of the terminal 100. Hence, the rotation state of the terminal 100 may include a screen mode of the terminal 100.

For one example, the terminal 100 may determine the rotation state of the terminal 100 as a landscape mode or a portrait mode.

In particular, the controller 180 of the terminal 100 may determine the rotation state of the terminal 100 as the landscape mode or the portrait mode based on a sensing value sensed by at least one of an acceleration sensor, a magnetic sensor, a gravity sensor and a gyroscope sensor included in the sensing unit 140. In this case, the landscape mode may indicate a state that a longer one of lateral sides of the terminal 100 or the display 151 is located on a top side, and the portrait mode may indicate a state that a shorter one of the lateral sides of the terminal 100 or the display 151 is located on the top side.

The terminal 100 may obtain a first input for the head mounted display 200 to display an input interface [S505].

The controller 180 of the terminal 100 may receive the first input for the head mounted display 200 to display the input interface through at least one of the display 151 and the user input unit 123.

For one example, the controller 180 of the terminal 100 may obtain a touch input corresponding to the first input for the head mounted display 200 to display the input interface through the display 151. In this case, the display 151 may be in turn-on or turn-off state. If the display 151 is in the turn-on state, the display 151 may display an object related to the input interface or an object unrelated to the input interface. The touch input corresponding to the first input may include one of various touch inputs such as a short (or tap) touch, a long touch, a multi-touch, a drag touch, a flick touch, a pinch-in touch, a pinch-out touch, a swipe touch, a hovering touch and the like.

As the display 151 is able to sense a touch input, it may receive a force touch of touching with a force over a reference pressure as the touch input corresponding to the first input. For instance, as the display 151 can include a force sensor configured to recognize a force touch, the display 151 can sense a touch pressure. In this case, the force sensor may be included in the sensing unit 140 and is able to sense the touch input by sensing a pressure between the components of the display 151. For instance, the force sensor may sense the touch pressure by recognizing a physical distance between a display backlight and a panel.

Based on the determined rotation state and the obtained first input, the terminal 100 may determine a first input interface that is to be displayed on the head mounted display 200 [S507].

For one example, if the determined rotation state is the portrait mode and the obtained first input is the touch input with a single hand or finger, the controller 180 of the terminal 100 may determine a keypad interface of a reduced type as the first input interface to be displayed on the head mounted display 200. For instance, the keypad of the reduced type may include a matrix keypad having a plurality of keys arranged thereon.

For another example, if the determined rotation state is the portrait mode and the obtained first input is the touch input with a single hand or finger, the controller 180 of the terminal 100 may determine one of a word selection interface capable of selecting a recently used word, a written input interface capable of receiving a written input and a clipboard interface capable of copying a stored text or image as the first input interface to be displayed on the head mounted display 200.

For further example, if the determined rotation state is the landscape mode and the obtained first input is the touch input with a plurality of hands or fingers, the controller 180 of the terminal 100 may determine a keypad interface (e.g., a QWERTY keyboard interface) in size, which is larger than that of the reduced-type keypad interface mentioned in the foregoing description, as the first input interface to be displayed on the head mounted display 200. And, the large-size keypad interface may include at least one of Dvorak keyboard interface, AZERTY keyboard interface, QWERTZ keyboard interface, F keyboard interface, Colemak keyboard interface and the like.

The above description of the input interface determination is the example for description, and shapes and types of the first input interface determined according to a terminal's rotation state and a first input can be variously set according to selections made by a user or designer. And, the input interface determination shall be described in detail later.

The terminal 100 may transmit a control signal for displaying the determined first input interface to the head mounted display 200 [S509].

The controller 180 of the terminal 100 may transmit a control signal for displaying the input interface determined based on the determined rotation state and the obtained first input to the head mounted display 200. The controller 180 may transmit a control signal to the head mounted display 200 through the wireless communication unit 110 or the interface unit 160. For one example, the controller 180 may transmit a control signal for displaying the determined first input interface to the head mounted display 200 through the connected cable 365. And, the control signal for displaying the determined first input interface may include a signal including information on the determined rotation state and the obtained first input.

The head mounted display 200 may display the first input interface corresponding to the control signal transmitted from the terminal 100 on the display 250 [S511].

For instance, the controller 280 of the head mounted display 200 may display the first input interface corresponding to the transmitted control signal on the display 250. For one example, the controller 280 of the head mounted display 200 may display the first input interface as an image corresponding to augmented reality, virtual reality or mixed reality on the display 250. In this case, as mentioned in the foregoing description, the first input interface may include one of a reduced type keypad, a word selection input interface, a clipboard interface, a large-size keypad interface and the like.

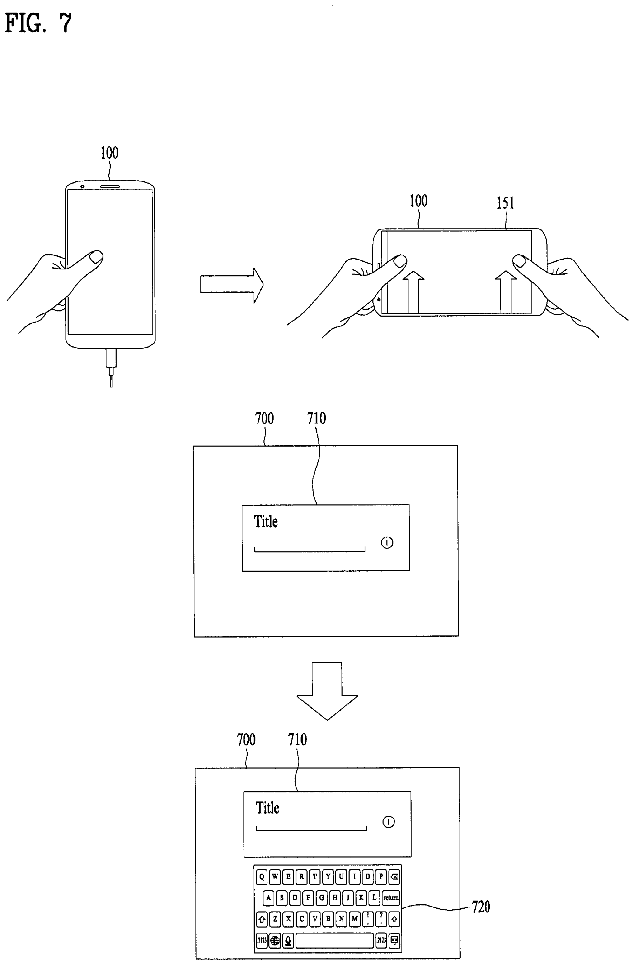

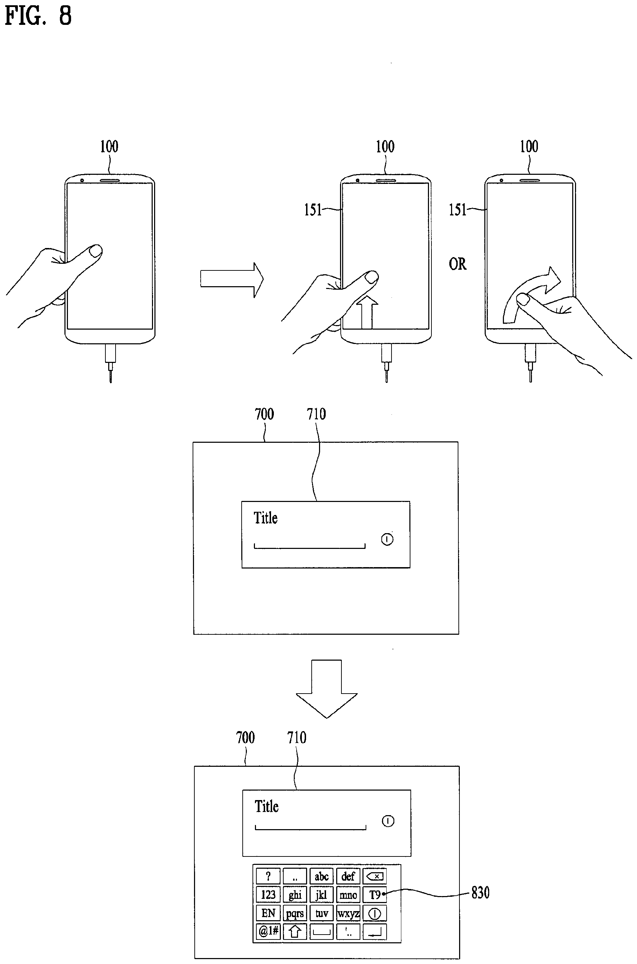

A detailed embodiment for the aforementioned first input interface determination and display is described with reference to FIG. 7 and FIG. 8.

FIG. 7 is a diagram for an example of displaying QWERTY keyboard interface according to various embodiments of the present invention.

Referring to FIG. 7, while a rotation state of a terminal is a landscape mode, the terminal 100 may obtain a first input of swiping on left and right partial regions of the display 151 with both hands in a prescribed direction. In this case, the first input may include an input applied within a predetermined time in which the terminal 100 is rotated from the portrait mode to the landscape mode, or an input applied in the landscape mode. The head mounted display 200 connected to the terminal 100 may be in a state of displaying an input window 710 for inputting a text or a state of outputting a different image, on an output screen 700 displayed on the display 250. And, the prescribed direction according to the first input may include a top or bottom side direction of the terminal 100.

For one example, in the landscape mode, if obtaining a first input of swiping on left and right partial regions of the display 151 in a top side direction, the controller 180 may determine a large-size keypad interface (e.g., QWERTY keyboard interface) as a first input interface to be displayed on the head mounted display 200. Hence, the terminal 100 may transmit a control signal for displaying the QWERTY keyboard interface to the head mounted display 200. Based on the transmitted control signal, the head mounted display 200 may display the QWERTY keyboard interface 720 on the output screen 700.

FIG. 8 is a diagram for an example of displaying a matrix keypad interface according to various embodiments of the present invention.

Referring to FIG. 8, while a rotation state of a terminal is a portrait mode, the terminal 100 may an input of swiping on a partial region of the display 151 with one hand in a prescribed direction or a touch input of drawing a predetermined pattern as a first input. In this case, the first input may include an input applied in the portrait mode of the terminal 100 or an input applied within a predetermined time in which the terminal 100 is rotated from the landscape mode to the portrait mode. The head mounted display 200 connected to the terminal 100 may be in a state of displaying an input window 710 for inputting a text or a state of outputting a different image or video, on an output screen 700 displayed on the display 250. And, the prescribed direction according to the first input may include a direction toward a prescribed lateral side of the terminal 100.

For one example, in the landscape mode, if obtaining a first input of swiping on a partial region of the display 151 in a top side direction, the controller 180 may determine a reduced-type keypad interface as a first input interface to be displayed on the head mounted display 200. Hence, the terminal 100 may transmit a control signal for displaying a matrix keypad interface to the head mounted display 200. Based on the transmitted control signal, the head mounted display 200 may display the matrix keypad interface 830 on the output screen 700.

For another example, in the landscape mode, if obtaining a first input corresponding to a touch input of drawing a caret-shape pattern on a prescribed region of the display 151, the controller 180 may determine a reduced-type keypad interface as a first input interface to be displayed on the head mounted display 200. Hence, the terminal 100 may transmit a control signal for displaying a matrix keypad interface to the head mounted display 200. Based on the transmitted control signal, the head mounted display 200 may display the matrix keypad interface 830 on the output screen 700.

The above-described example of displaying the input interface of the head mounted display 200 according to the rotation sate and the obtained first input is provided as one example for the description, by which the present invention is non-limited. Therefore, the first input interface may be displayed according to one of various first inputs depending on a selection made by a user or designer.

FIG. 5 is referred to again.

Based on the first input interface displayed on the head mounted display 200, the terminal 100 may obtain a second input for inputting a text [S513].

The terminal 100 may receive an input to the first input interface displayed on the display 250 of the head mounted display 200. Accordingly, the terminal 100 may operate as an input device of the head mounted display 200. Thus, the second input may include a touch input of applying an input of selecting coordinates, which correspond to a prescribed point of the screen 700 displayed on the display 250 of the head mounted display 200, through the display 151 of the terminal 100.

The terminal 100 may transmit a signal for the obtained second input to the head mounted display 200 [S515]. The head mounted display 200 may input a text corresponding to the transmitted second input [S517].

In particular, the terminal 100 may transmit a signal for the second input, which is the touch input to the display 151, to the head mounted display 200. Based on the transmitted signal for the second input, the head mounted display 200 may display a cursor at a location corresponding to the second input on the screen displayed on the display 250 and input a text of the location corresponding to the second input.

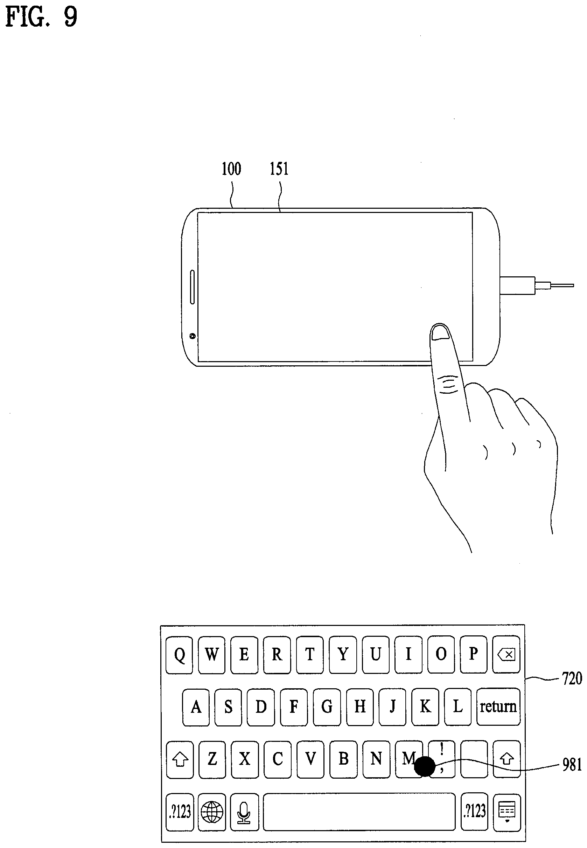

A detailed embodiment of the text input according to the second input is described with reference to FIGs. 9 to 16.

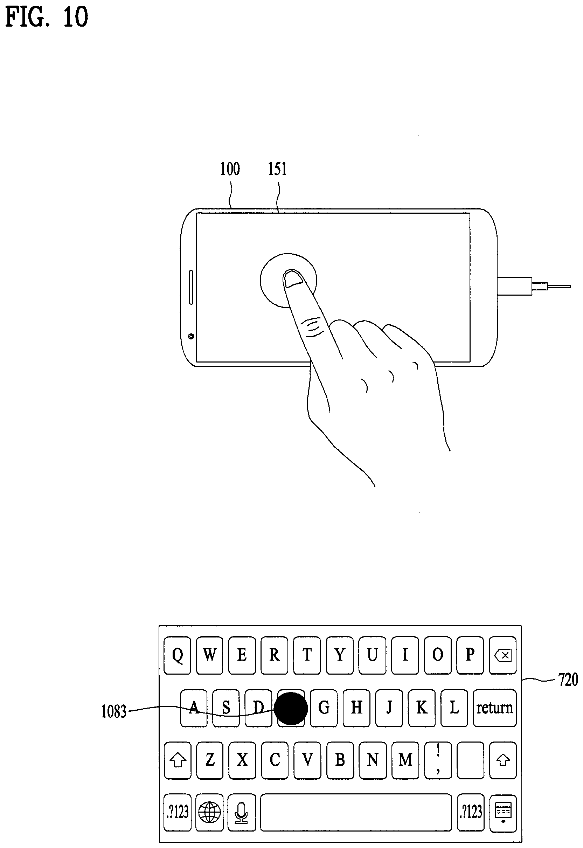

FIG. 9 and FIG. 10 are diagrams for examples of a focus display according to various embodiments of the present invention.

Referring to FIG. 9, while the head mounted display 200 displays a first input interface on the display 250, the terminal 100 may obtain a second input that is a touch input of selecting a prescribed point of the display 151. The terminal 100 may transmit a signal for the second input to the head mounted display 200. Based on the transmitted signal for the second input, the head mounted display 200 may display a first cursor 981 at a location corresponding to the second input on a QWERTY keyboard interface 720 corresponding to the first input interface. And, the head mounted display 200 may input 'm' that is a text at the location corresponding to the second input.

Referring to FIG. 10, while the head mounted display 200 displays a first input interface on the display 250, the terminal 100 may obtain a second input that is a touch input of selecting a prescribed point of the display 151. In this case, the second input may include a force touch that is a touch input over a predetermined pressure. The terminal 100 may transmit a signal for the second input to the head mounted display 200. Based on the transmitted signal for the second input, the head mounted display 200 may display a second cursor 1083 at a location corresponding to the second input on a QWERTY keyboard interface 720 corresponding to the first input interface. In this case, the second cursor 1081 may include a cursor displayed according to a force touch and may be distinguished from the first cursor 981. For instance, the head mounted display 200 may display the second cursor 1083 differing from the first cursor 981 in at least one of shape and color. In response to the second input corresponding to the force touch, the terminal 100 or the head mounted display 200 may receive an input of a path input mentioned in the following description. In this case, the path input may be applied in a manner of inputting a text or words determined by combining keys on an input path and mean a Swype input or an input through a Swype keyboard.

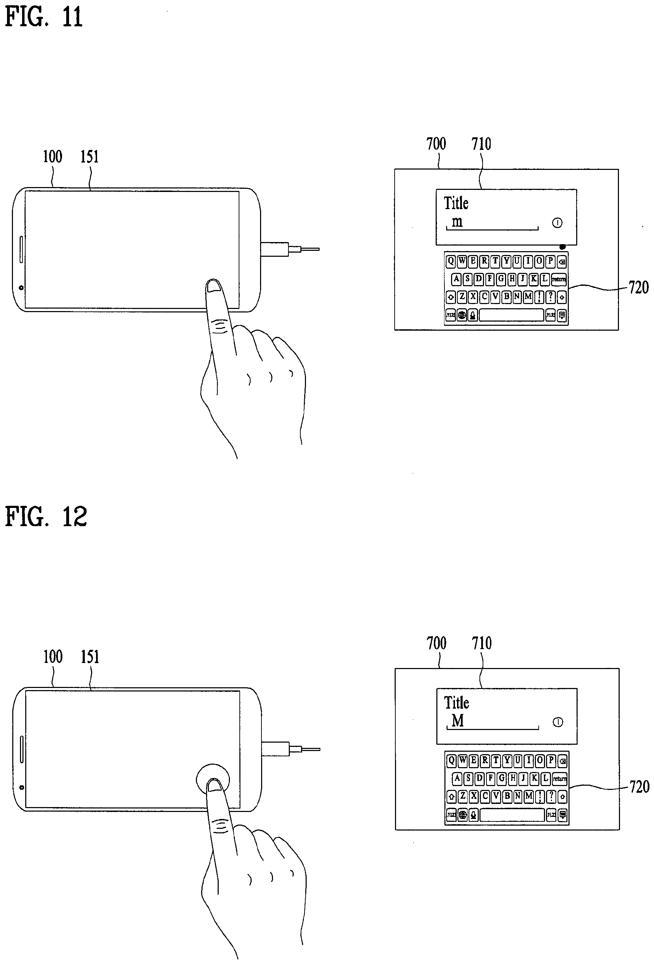

FIG. 11 and FIG. 12 are diagrams for examples of a text input according to various embodiments of the present invention.

Referring to FIG. 11, while the head mounted display 200 displays a first input interface on the display 250, the terminal 100 may obtain a second input that is a touch input of selecting a prescribed point of the display 151. The terminal 100 may transmit a signal for the second input to the head mounted display 200. Based on the transmitted signal for the second input, the head mounted display 200 may input 'm', which is a text at the location corresponding to the second input on the QWERTY keyboard interface 720 corresponding to the first input interface, to the input window 710 displayed on the display 250.

Meanwhile, if the terminal 100 receives the second input to the first input interface with a force touch corresponding to a touch input over a predetermined pressure, the head mounted display 200 may input the same text as simultaneously inputting a shift key on a keyboard for a text corresponding to the second input. Hence, in case of a force touch input, a capital may be inputted in English, or a double consonant or a diphthong may be inputted in Korean. This is described in detail with reference to FIG. 12.

Referring to FIG. 12, while the head mounted display 200 displays a first input interface on the display 250, the terminal 100 may obtain a second input that is a touch input of selecting a prescribed point of the display 151. In this case, the second input may include a force touch corresponding to a touch input over a predetermined pressure. The terminal 100 may transmit a signal for the second input to the head mounted display 200. Based on the transmitted signal for the second input, the head mounted display 200 may input 'M', which is the capital of the letter 'm' at the location corresponding to the second input on the QWERTY keyboard interface 720 corresponding to the first input interface, to the input window 710.

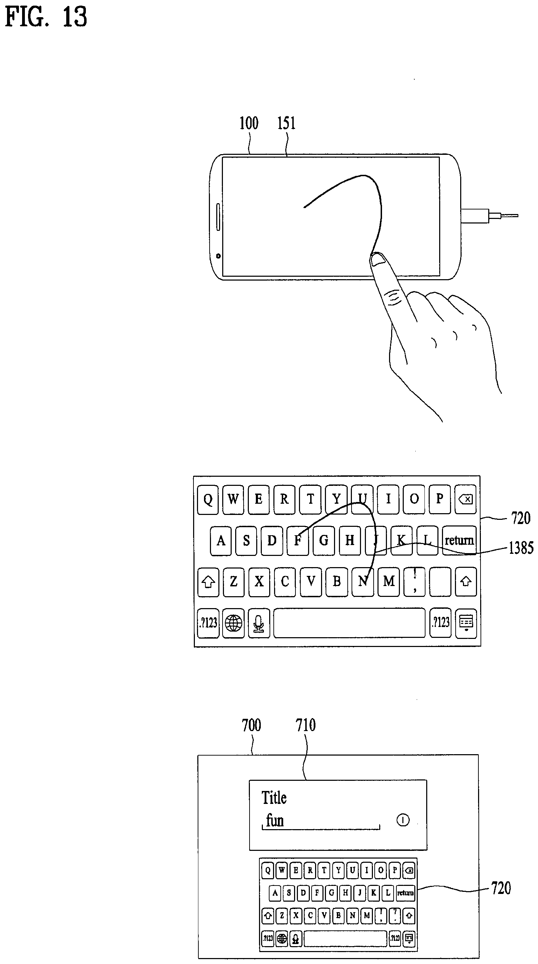

Meanwhile, the terminal 100 may receive a path input or may input a text or word according to a path input. This is described in detail with reference to FIG. 13.

FIG. 13 is a diagram for an example of a path input according to various embodiments of the present invention.

Referring to FIG. 13, while the head mounted display 200 displays a first input interface on the display 250, the terminal 100 may obtain a second input that is a touch input of drawing a predetermined path. The terminal 100 may transmit a signal for the second input to the head mounted display 200. Based on the transmitted signal for the second input, the head mounted display 200 may display a path 1385 corresponding to the second input on the QWERTY keyboard interface 720 corresponding to the first input interface and input a word 'fun' corresponding to a combination of letters on the path 1385 to the input window 710. Meanwhile, if the word determined according to the combination of the letters on the path corresponding to the second input includes a plurality of words, the head mounted display 200 may display a selection window for selecting one of a plurality of the words. And, the terminal 100 or the head mounted display 200 may recognize a touch input of drawing a predetermined path after the force input to the display 151 of the terminal 100 as a text input. Hence, the terminal 100 or the head mounted display 200 can prevent collision between a focus shift according to a motion of the head mounted display 200 and a focus shift according to a touch input to the terminal 100 and distinguish a path input from a touch input other than the path input.

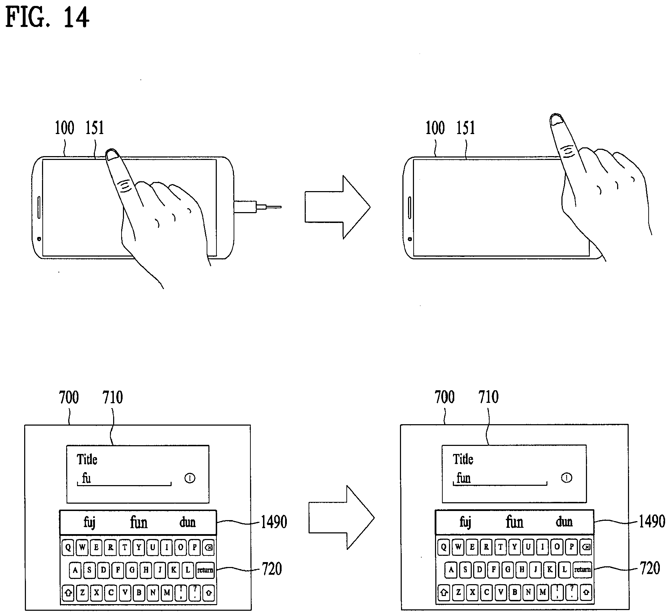

Meanwhile, the terminal 100 according to various embodiments of the present invention can obtain a second input including an input for displaying a recommended word and enable the head mounted display 200 to display the recommended word. This is described with reference to FIG. 14.

FIG. 14 is a diagram for an example of a recommended word input according to various embodiments of the present invention.

Referring to FIG. 14, while the head mounted display 200 displays a first input interface on the display 250, the terminal 100 may control a partial text to be inputted to the input window 710 displayed on the display 250 of the head mounted display 200 through a touch input for selecting a prescribed point of the display 151. The terminal 100 may obtain a touch input of swiping on a bezel of the terminal 100 or a partial region of the display 151 corresponding to the bezel in a bottom direction and is able to transmit a signal for the obtained touch input to the head mounted display 200. In response to the signal delivered to the input window 710, the head mounted display 200 may display a recommended word window 1490 for displaying recommended words based on the partial text inputted to the input window 710. For instance, based on 'fu' inputted to the input window 710, the head mounted display 200 may display the recommended words 'fuj', 'fun' and 'dun' on the recommended word window 1490.

The terminal 100 may obtain a touch input of swiping on a bezel or a partial region corresponding to the bezel in left or right direction and transmit a signal for the obtained touch input to the head mounted display 200. In response to the signal delivered to the input window 710, the head mounted display 200 may shift a focus for selecting a prescribed word displayed on the recommended word window 1490. For instance, in case of receiving a signal for a touch input of swiping on a bezel or a partial region corresponding to the bezel in a left direction, the head mounted display 200 may shift a focus on a word displayed on the recommended word window 1490 in the left direction. For another instance, in case of receiving a signal for a touch input of swiping on a bezel or a partial region corresponding to the bezel in a right direction, the head mounted display 200 may shift a focus on a word displayed on the recommended word window 1490 in the right direction.

The terminal 100 may obtain a touch input of swiping on a bezel or a partial region corresponding to the bezel in a top direction and transmit a signal for the obtained touch input to the head mounted display 200. In response to the signal delivered to the input window 710, the head mounted display 200 may select a prescribed word displayed on the recommended word window 1490 and then input the selected word to the input window 710. For instance, in case of receiving a signal for a touch input of swiping on a bezel or a partial region corresponding to the bezel in a top direction, the head mounted display 200 may input a focused word among the words displayed on the recommended word window 1490 to the input window 710. For one example, while 'fun' is focused on among the words displayed on the recommended word window 1490, if receiving a signal for a touch input of swiping in a top direction, the head mounted display 200 can input 'fun' to the input window 710.

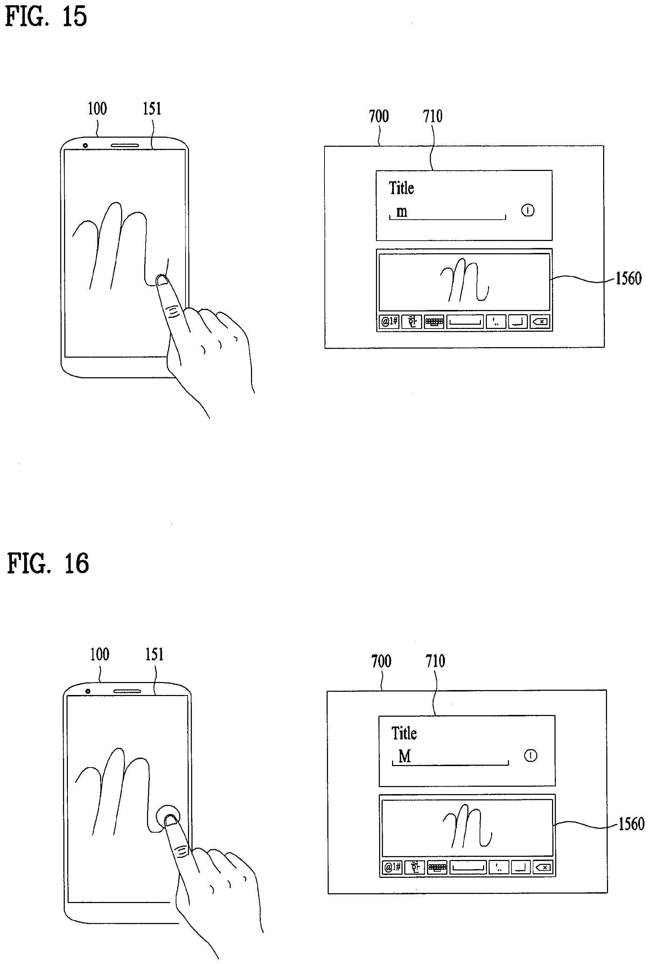

Meanwhile, if a written input interface is displayed as a first input interface, the terminal 100 may obtain a written input of inputting a text as a second input and is able to transmit a signal for the obtained written input to the head mounted display 200. Hence, the head mounted display 200 may input a text according to the written input. This is described with reference to FIG. 15 and FIG. 16.

FIG. 15 and FIG. 16 are diagrams for examples of a written input according to various embodiments of the present invention.

Referring to FIG. 15, while the head mounted display 200 displays a written input interface 1560 on the screen 700 as a first input interface, the terminal 100 may obtain a second input that is a touch input of writing an input of a text on the display 151. The terminal 100 may transmit a signal for the second input to the head mounted display 200. Based on the transmitted signal for the second input, the head mounted display 200 may display the written input on the touch input interface 1560 that is the first input interface displayed on the display 250 and may be able to input a letter 'm' corresponding to the written input to the input window 710.

Meanwhile, if the terminal 100 receives the written input, which is the second input to the first input interface, with a force touch corresponding to a touch input over a predetermined pressure, the head mounted display 200 may input the same text as simultaneously inputting a shift key on a keyboard for a text corresponding to the second input. Hence, in case of a force touch input, a capital may be inputted in English, or a double consonant or a diphthong may be inputted in Korean. This is described in detail with reference to FIG. 16.

Referring to FIG. 16, while the head mounted display 200 displays a written input interface 1560 on the screen 700 as a first input interface, the terminal 100 may obtain a second input that is a touch input of writing an input of a text on the display 151. Herein, the second input may include a force touch that is a touch input over a predetermined pressure. The terminal 100 may transmit a signal for the second input to the head mounted display 200. Based on the transmitted signal for the second input, the head mounted display 200 may display the written input on the touch input interface 1560 that is the first input interface displayed on the display 250 and may be able to input the capital 'M' of the letter 'm' corresponding to the written input to the input window 710.

Thus, while the head mounted display 200 displays the first interface, the terminal 100 may obtain an input to the first interface and transmit a signal for the obtained input to the head mounted display 200. Accordingly, the head mounted display 200 may input a text according to the transmitted signal.

FIG. 5 is referred to again.

The terminal 100 may obtain a third input to change the displayed first input interface [S519]. The terminal 100 may transmit a signal for the third input to the head mounted display 200 [S521]. The head mounted display 200 may display a second input interface corresponding to the transmitted third input [S523].

The controller 180 of the terminal 100 may receive the third input for changing the first input interface displayed on the head mounted display 200 through at least one of the display 151 and the user input unit 123. The third input may include various touch inputs like the aforementioned first input.

The controller 180 of the terminal 100 may transmit a signal for the third input to change the first input interface displayed by the head mounted display 200 into the second input interface according to the third input through the wireless communication unit 110 or the interface unit 160. Details are mentioned in the former description of transmitting the control signal and shall be omitted from the following description.

If receiving the signal for the third input in the course of displaying the first input interface on the display 250, the head mounted display 200 may remove the first input interface and display the second input interface corresponding to the third input.

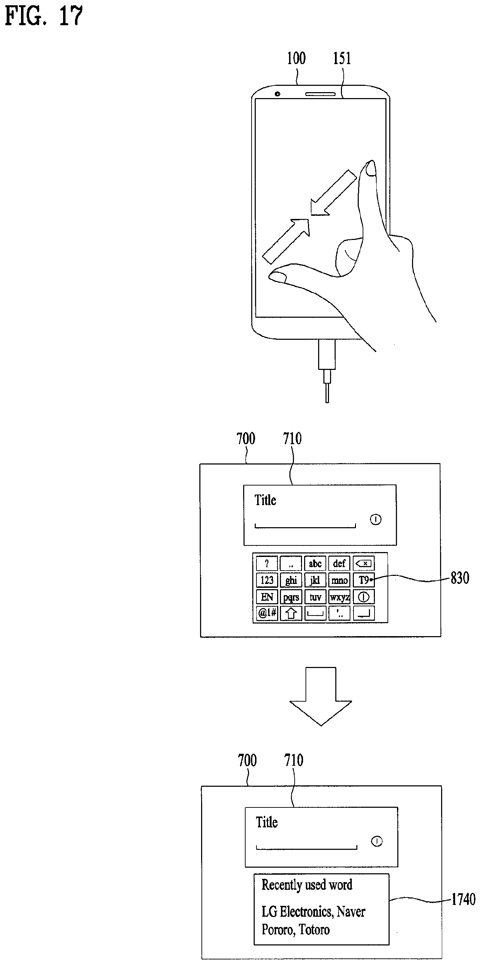

A detailed embodiment for the above-described second input interface display is described with reference to FIGs. 17 to 22.

FIG. 17 is a diagram for an example of switching to a word selection input interface according to various embodiments of the present invention.

Referring to FIG. 17, while the head mounted display 200 displays a matrix keypad interface 830 as a first input interface on the display 250, the terminal 100 may obtain a third input that is a pinch-in touch input to the display 151. The terminal 100 may transmit a signal for the third input to the head mounted display 200. Based on the transmitted signal for the third input, the head mounted display 200 may remove the matrix keypad interface 830 corresponding to the first input interface from the screen 700 displayed on the display 250 and display a word selection input interface 1740 corresponding to a second input interface. The word selection input interface 1740 may include an input interface for displaying at least one word recently inputted to the head mounted display 200 and receiving an input of a selection of a prescribed one of the displayed words. The head mounted display 200 may receive an input to the word selection input interface 1740 and input a word corresponding to the received input to the input window 710.

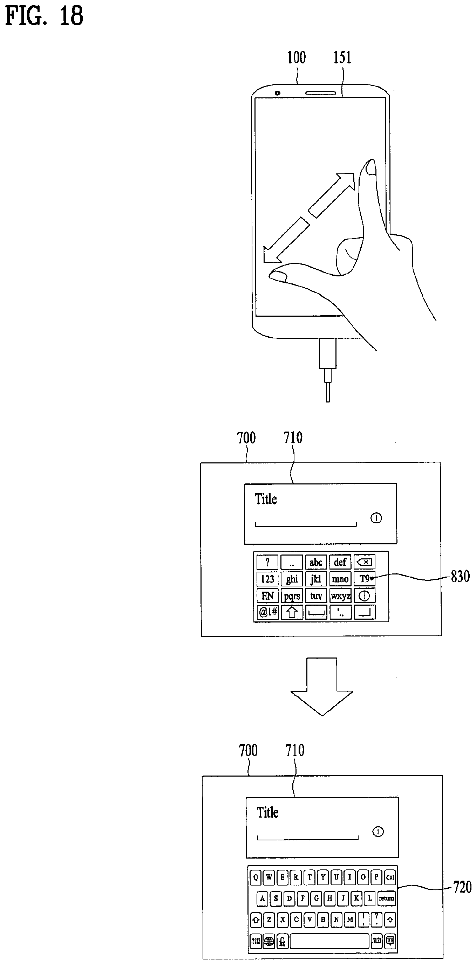

FIG. 18 is a diagram for an example of switching to a QWERTY keyboard interface according to various embodiments of the present invention.

Referring to FIG. 18, while the head mounted display 200 displays a matrix keypad interface 830 as a first input interface on the display 250, the terminal 100 may obtain a third input that is a pinch-out touch input to the display 151. The terminal 100 may transmit a signal for the third input to the head mounted display 200. Based on the transmitted signal for the third input, the head mounted display 200 may remove the matrix keypad interface 830 corresponding to the first input interface from the screen 700 displayed on the display 250 and display a QWERTY keyboard interface 720 corresponding to a second input interface. The head mounted display 200 may receive an input to the QWERTY keyboard interface 720 and input a text corresponding to the received input to the input window 710.

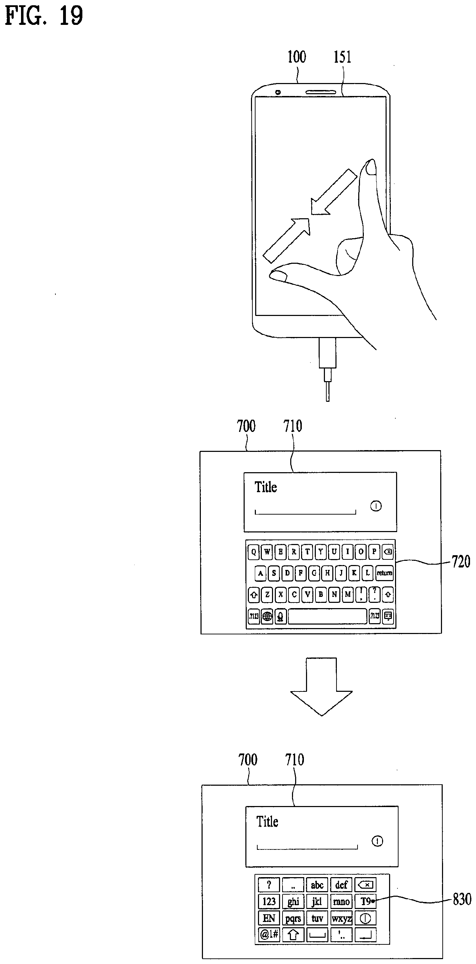

FIG. 19 is a diagram for an example of switching to a matrix keypad interface according to various embodiments of the present invention.

Referring to FIG. 19, while the head mounted display 200 displays a QWERTY keyboard interface 720 as a first input interface on the display 250, the terminal 100 may obtain a third input that is a pinch-out touch input to the display 151. The terminal 100 may transmit a signal for the third input to the head mounted display 200. Based on the transmitted signal for the third input, the head mounted display 200 may remove the QWERTY keyboard interface 720 corresponding to the first input interface from the screen 700 displayed on the display 250 and display a matrix keypad interface 830 corresponding to a second input interface. The head mounted display 200 may receive an input to the matrix keypad interface 830 and input a text corresponding to the received input to the input window 710.

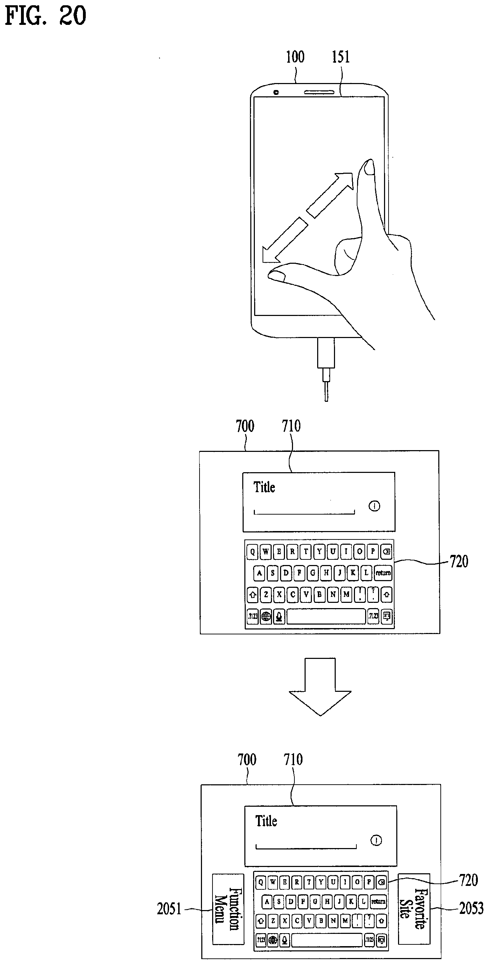

FIG. 20 is a diagram for an example of switching to a QWERTY keyboard interface including an additional menu according to various embodiments of the present invention.

Referring to FIG. 20, while the head mounted display 200 displays a QWERTY keyboard interface 720 as a first input interface on the display 250, the terminal 100 may obtain a third input that is a pinch-out touch input to the display 151. The terminal 100 may transmit a signal for the third input to the head mounted display 200. Based on the transmitted signal for the third input, the head mounted display 200 may display the QWERTY keyboard interface 720 and an additional menu as a second input interface on the screen 700 displayed on the display 250. In this case, the additional menu may include a menu for a function of the head mounted display 200 or a shortcut menu for a prescribed operation. For instance, the head mounted display 200 may display the QWERTY keyboard interface 720 and also display a function menu 2501 and a favorite menu 2035 as the additional menus. The function menu 2051 may be a menu for a function of the head mounted display 200 and the favorite menu 2053 may be a menu for opening a specific site. The head mounted display 200 may receive an input to a prescribed one of the keyboard interface 720, the function menu 2051 and the favorite menu 2053 through the terminal 100 and input a text corresponding to the input to the input window 710 or perform an operation corresponding to the selected menu.

As mentioned in the foregoing description, in response to the third input to the terminal 100, the head mounted display 200 may switch the displayed first input interface to the second input interface. Like the above-described embodiment, if the pitch-in touch input to the display 151 of the terminal 100 is obtained as the third input, the head mounted display 200 may display an input interface reduced smaller than the displayed first input interface as the second input interface. In this case, the reduced input interface may mean an input interface in size smaller than that of the previously displayed first input interface or an input interface having keys of which number is smaller than that of the previously displayed first input interface. If the pitch-out touch input to the display 151 of the terminal 100 is obtained as the third input, the head mounted display 200 may display an input interface enlarged larger than the displayed first input interface as the second input interface. In this case, the enlarged input interface may mean an input interface in size larger than that of the previously displayed first input interface, an input interface having keys of which number is greater than that of the previously displayed first input interface, or an input interface configured to further display an additional menu in addition to the previously displayed first input interface.

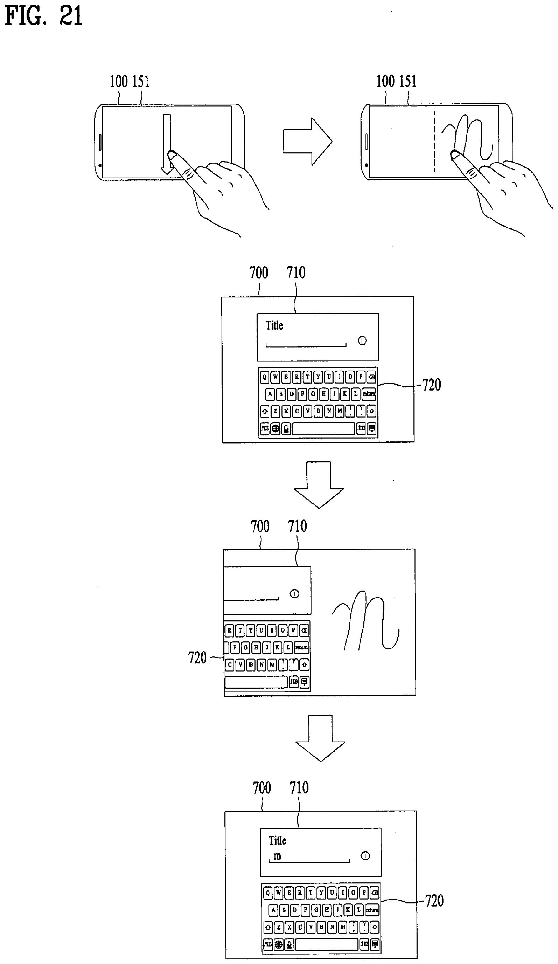

The head mounted display 200 may further display an additional input interface in addition to the first input interface previously displayed as the second input interface corresponding to the third input. This is described with reference to FIG. 21.

FIG. 21 is a diagram for an example of a written input according to various embodiments of the present invention.

Referring to FIG. 21, while the head mounted display 200 displays a QWERTY keyboard interface 720 as a first input interface on the display 250, the terminal 100 may obtain a third input that is a touch input of dividing the display 151 in a prescribed direction. The terminal 100 may transmit a signal for the third input to the head mounted display 200. Based on the transmitted signal for the third input, the head mounted display 200 may display the QWERTY keyboard interface 720, which is the first input interface, and a written input interface on the screen 700 displayed on the display 250. In this case, the written input interface may include the aforementioned written input interface 1560 or a blank or page on which a written input can be displayed. The terminal 100 may obtain a written input to a prescribed region of the display 151 divided by the third input. The terminal 100 may display a line according to the written input applied to the prescribed region of the display 151 divided by the third input and also display a boundary line for distinguishing a written input available region and a written input unavailable region from each other. The terminal 100 may transmit a signal for the written input to the head mounted display 200. Based on the transmitted signal for the written input, the head mounted display 200 may display a line according to the written input on the written input interface, e.g., a written input displayable blank. And, the head mounted display 200 may input a text according to the written input to the input window 710. Hence, if the written input applied to the terminal 100 is 'm', the head mounted display 200 may input 'm' to the input window 710.

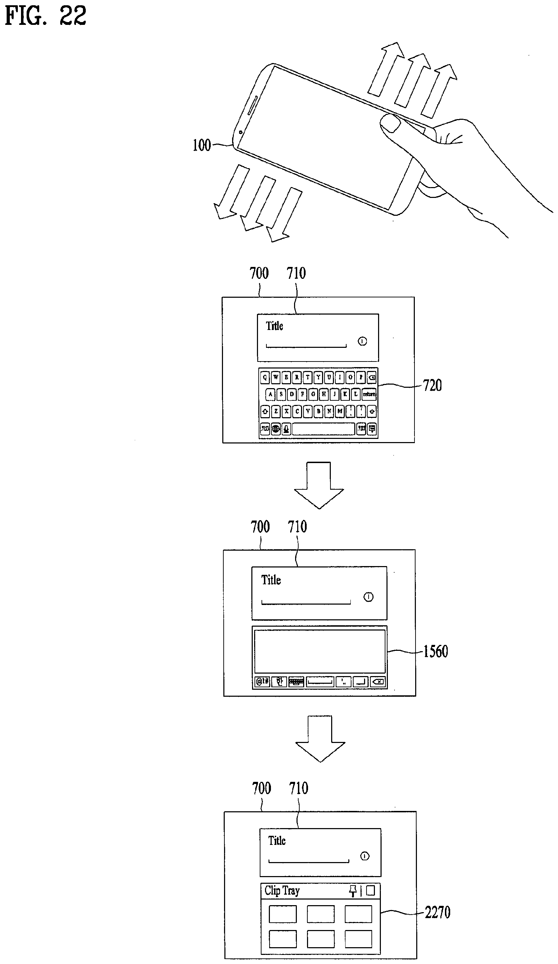

The terminal may obtain various inputs to the terminal 100 as third inputs as well as a touch input to the display 151. This is described with reference to FIG. 22.

FIG. 22 is a diagram for an example of switching an input interface according to various embodiments of the present invention.

Referring to FIG. 22, the terminal 100 may obtain an input of shaking the terminal 100. For instance, the controller 180 of the terminal 100 may recognize the input of shaking the terminal 100 based on a sensing value of the sensing unit 140. The terminal 100 may obtain the input of shaking the terminal 100 as a third input for switching a first input interface displayed by the head mounted display 200 to a second input interface. The terminal 100 may transmit a signal for the third input corresponding to the input of shaking the terminal 100 to the head mounted display 200. Based on the transmitted signal for the third input, the head mounted display 200 can switch a QWERTY keyboard interface 720 (i.e., the first input interface) to a written input interface 1560 (i.e., the second input interface) on the screen 700 displayed on the display 250. If the terminal 100 receives the input of shaking the terminal 100 again, the terminal 100 may transmit a signal according to the re-input of shaking the terminal 100 to the head mounted display 200. In response to the transmitted signal, the head mounted display 200 may switch the written input interface 1560 (i.e., the second input interface) to a clipboard interface 2270 that is a third input interface. Thus, in response to the input of shaking the terminal 100, the head mounted display 200 may switch an input interface displayed on the head mounted display 200 to another input interface.

FIG. 5 is referred to again.

Based on the second input interface displayed on the head mounted display 200, the terminal 100 may obtain a fourth input for inputting a text [S525]. The terminal 100 may transmit a signal for the obtained fourth input to the head mounted display 200 [S527]. The head mounted display 200 may input a text corresponding to the transmitted fourth input [S529].

Since a content of the text inputted by the head mounted display 200 on the basis of the fourth input is identical to that of the text inputted on the basis of the second input, its details shall be omitted.

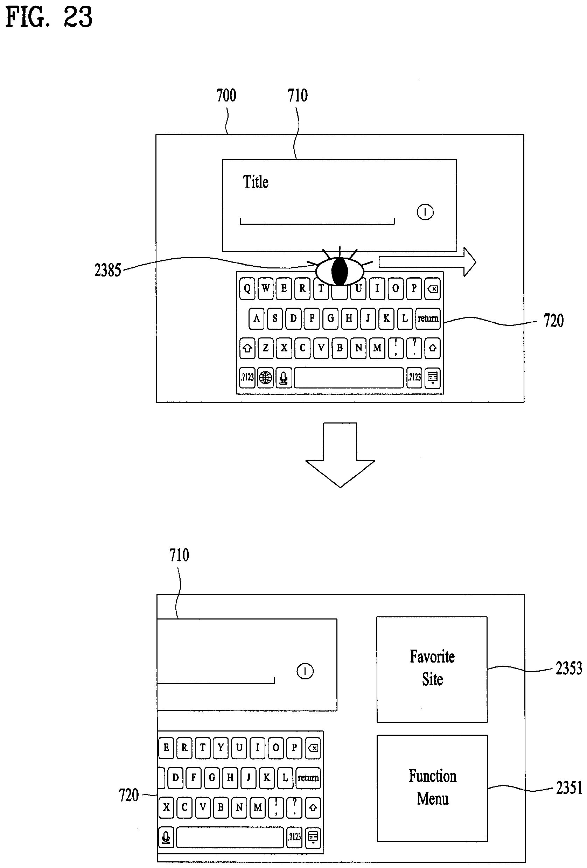

While an input interface is displayed, the head mounted display 200 according to various embodiments of the present invention can further display an additional menu on the screen 700 in response to a motion of the head mounted display 200. This is described with reference to FIG. 23.

FIG. 23 is a diagram for an example of an additional menu display according to various embodiments of the present invention.

Referring to FIG. 23, the head mounted display 200 may display an input window 710 and a QWERTY keyboard interface 720 on the screen 700 displayed on the display 250. And, the head mounted display 200 may further display a cursor 2385. Through the sensor module 240, the head mounted display 200 may recognize a motion that a user wearing the head mounted display 200 moves user's head in a right direction. In doing so, the motion that the user wearing the head mounted display 200 moves the user's head in the right direction may be the same as moving eyes on the screen 700 in the right direction. Hence, the head mounted display 200 may display the screen 700 in a manner of displaying a screen shifted in the right direction from a screen before the motion. And, the head mounted display 200 may display the cursor 2385 in response to the recognized motion. Moreover, the head mounted display 200 may display the input window 710, the QWERTY keyboard interface 720 and additional menus (e.g., a favorite menu 2352, a function menu 2351, etc.) on the screen 700 shifted to the right. The function menu 2351 may include a menu for a function of the head mounted display 200, and the favorite menu 2353 may include a menu for opening a specific site. Thus, the head mounted display 200 can further display additional menus according to a motion of the head mounted display 200, a shift of user's eyes, or the like.

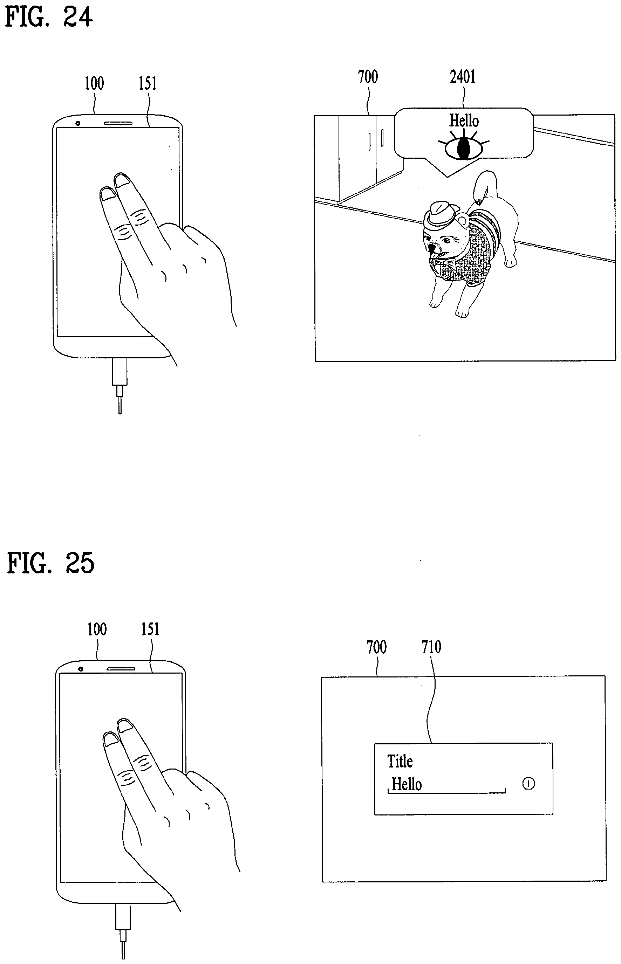

In case of receiving an input of a specific gesture at the terminal 100, the terminal 100 according to various embodiments of the present invention may copy or paste a specific text or object displayed on the head mounted display 200. This is described with reference to FIG. 24 and FIG. 25.

FIG. 24 is a diagram for an example of a copy input according to various embodiments of the present invention.

Referring to FIG. 24, the head mounted display 200 may output an image containing at least one text or object to the screen 700. For instance, the head mounted display 200 may output an image containing a message window 2401 and display a focus 2485 according to user's eyes. Meanwhile, the focus 2485 may move in response to an input to the terminal 100 or the head mounted display 200 or a motion of the head mounted display 200. The terminal 100 may obtain a touch input of pressing long the terminal 100 with two fingers as an input for copy and transmit a signal for the obtained input for the copy to the head mounted display 200. Based on the transmitted signal, the head mounted display 200 may copy a text corresponding to the focus 2485. The head mounted display 200 may save the copied text to a clipboard or paste it on another input region.

FIG. 25 is a diagram for an example of a paste input according to various embodiments of the present invention.

Referring to FIG. 25, the head mounted display 200 may output an image containing at least one of an input window or region to the screen 700. For instance, the head mounted display 200 may output an image containing an input window 710. The terminal 100 may obtain a touch input of pressing long the terminal 100 with two fingers as an input for paste and transmit a signal for the obtained input for the paste to the head mounted display 200. Based on the transmitted signal, the head mounted display 200 may paste a copied text on a location corresponding to the focus 2485. If a plurality of texts or objects are copied, the head mounted display 200 may display a clipboard for selecting a text or object to paste.

The above description is just one example, and various inputs may be set as an input for copy or paste. Moreover, the head mounted display 200 may be operable to copy or paste various objects as well as texts.

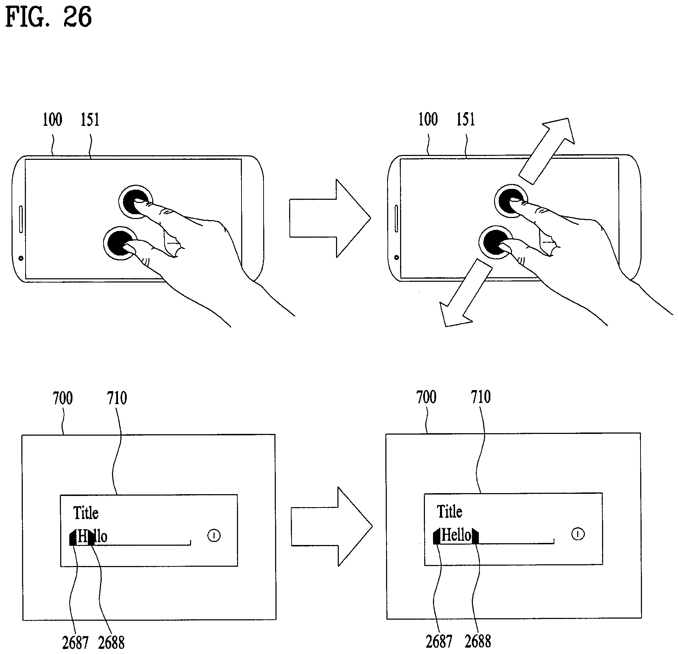

If receiving an input of a specific gesture at the terminal 100, the terminal 100 according to various embodiments of the present invention may display an indicator for selecting a specific region displayed on the head mounted display 200 and shift a location of the displayed indicator. This is described with reference to FIG. 26.

FIG. 26 is a diagram for an example of an indicator display and shift according to various embodiments of the present invention.

Referring to FIG. 26, the head mounted display 200 may output an image containing at least one text or object to the screen 700. For instance, the head mounted display 200 may display an input window 710 having an inputted word displayed thereon. The terminal 100 may obtain a touch input of pressing long the terminal 100 with two fingers as an input for displaying an indicator and transmit a signal for the obtained input for displaying the indicator to the head mounted display 200. Based on the transmitted signal, the head mounted display 200 may display indicators 2687 and 2688 at locations corresponding to the input. The indicators 2687 and 2688 may represent a plurality of indicators for selecting a specific region, e.g., the first indicator 2687 indicating a start of a specific region to be selected and the second indicator 2688 indicating an end of the specific region to be selected. While the head mounted display 200 displays the indicators 2687 and 2688, the terminal 100 may obtain an input for shifting the indicators. For instance, the terminal 100 may obtain an input of spreading two fingers to enable the displayed indicators 2687 and 2688 to select 'Hello' displayed on the input window 710. The terminal 100 may transmit a signal according to the input to the head mounted display 200. Based on the transmitted signal, the head mounted display 200 can shift the displayed so that indicators 2687 and 2688 can select 'Hello' displayed on the input window 710. Thus, 'Hello' displayed on the input window 710 can be selected.

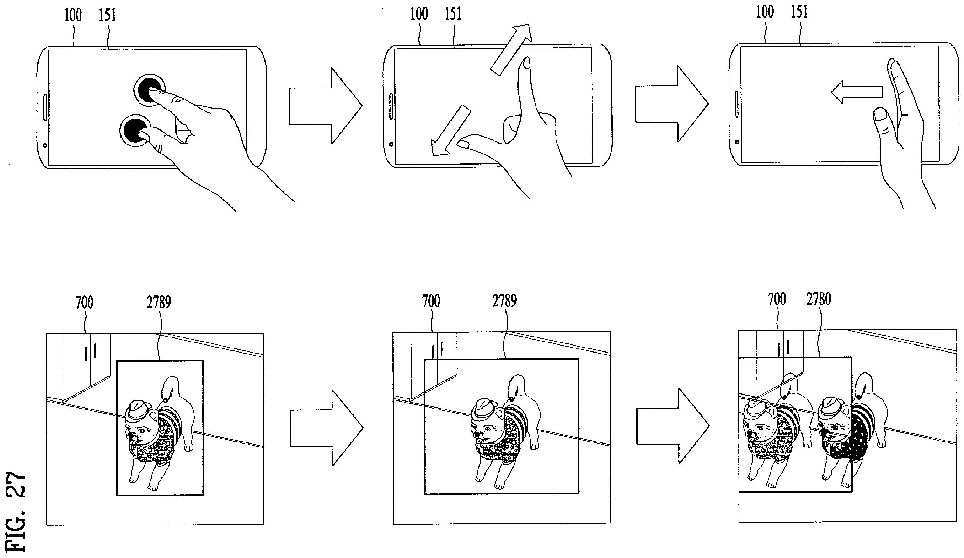

The head mounted display 200 may display an indicator for selecting an image region as well as the aforementioned text, shift a location of the displayed indicator in response to an input to the terminal 100, and adjust a size of the displayed indicator. Moreover, the head mounted display 200 may capture an image for a region selected through an indicator. This is described with reference to FIG. 27.

FIG. 27 is a diagram for an example of capturing an image according to various embodiments of the present invention.

Referring to FIG. 27, the head mounted display 200 may output an image to the screen 700. The terminal 100 may obtain a touch input of pressing long the terminal 100 with two fingers as an input for displaying an indicator and transmit a signal for the obtained input for displaying the indicator to the head mounted display 200. Based on the transmitted signal, the head mounted display 200 may display an indicator 2789 at a location corresponding to the input. The indicator 2789 may be represented as a block shape for selecting a specific region. While the head mounted display 200 displays the indicator 2789, the terminal 100 may obtain an input for increasing a size of the indicator. For instance, in order for the displayed indicator 2789 to select a region containing a specific object displayed on the screen 700, the terminal 100 may obtaining an input of spreading two fingers. The terminal 100 may transmit a signal according to the input to the head mounted display 200. Based on the transmitted signal, the head mounted display 200 may increase a size of the indicator 2789 so that the displayed indicator 2789 can designate an entire region containing a specific object to capture. While the head mounted display 200 displays the indicator 2789, the terminal 100 may obtain an input for capturing an image within an inner region of the indicator 2789. For instance, as an input for capturing the image within the inner region of the displayed indicator 2789, the terminal 100 may obtain a capture input of moving a palm or hand blade in a prescribed direction. The terminal 100 may transmit a signal according to the capture input to the head mounted display 200. Based on the transmitted signal, the head mounted display 200 may capture an image for the inner region of the displayed indicator 2789. The head mounted display 200 may display the captured image 2780, or may display at least one of an animation for the captured image 2780 to move in a direction corresponding to the capture input, a message indicating the capture and the like.

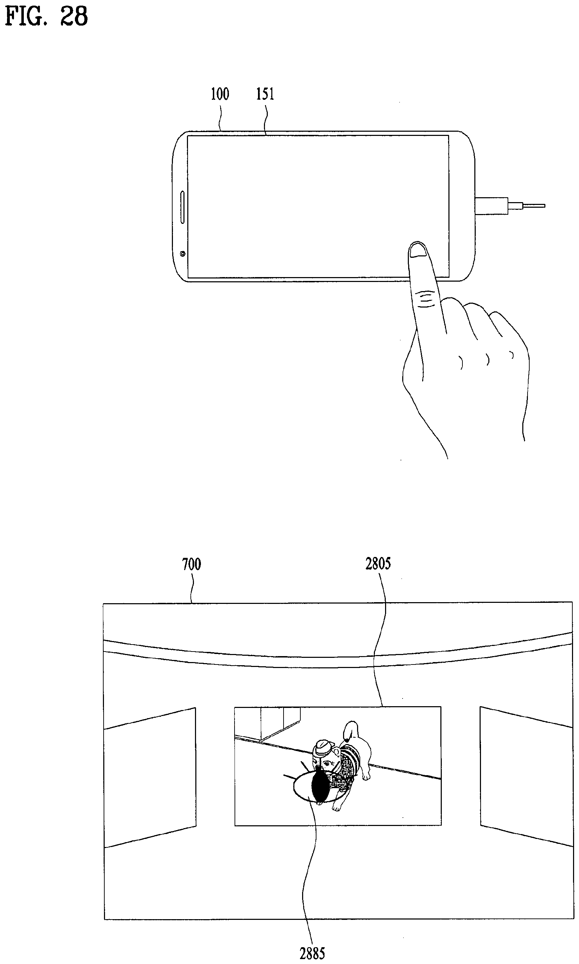

If receiving an input of a specific gesture at the terminal 100, the terminal 100 according to various embodiments of the present invention may copy a prescribed region of a 3D image displayed on the head mounted display 200. This is described with reference to FIG. 28.

FIG. 28 is a diagram for an example of copying a partial region of a 3D image according to various embodiments of the present invention.

Referring to FIG. 28, the head mounted display 200 may output a 3D image containing a plurality of 3D regions to the screen 700. The terminal 100 may obtain a touch input of pressing long the terminal 100 with a finger as an input for copying a prescribed region of the 3D image and transmit a signal for the obtained input for the copy to the head mounted display 200. In this case, the touch input of long pressing the terminal 100 with the finger may include a touch & hold input. Based on the transmitted signal, the head mounted display 200 may copy a 3D region 2805 corresponding to a focus 2805. If obtaining an input of selecting the copied 3D region 2805, the head mounted display 200 may display the selected 3D region 2805 and move to the selected 3D region 2805. Thus, the terminal 100 according to various embodiments of the present invention can select a prescribed region of a 3D region displayed by the head mounted display 200 and obtain an input for copy. Based on a signal transmitted from the terminal 100, the head mounted display 200 can copy the prescribed region of the 3D region. If the copied region is selected, the head mounted display 200 can move to the corresponding 3D region.

Although the aforementioned contents describe the head mounted display 200 connected to the terminal 100 only, various wearable devices as well as the head mounted display 200 are connected to the terminal 100 so as to receive an input related to an input interface and perform an operation according to the received input. While various devices as well as a wearable device are connected to the terminal 100, they can receive inputs through the terminal 100 and perform operations according to the received inputs, respectively. Therefore, the aforementioned contents are applicable to various devices as well as to a wearable device such as the head mounted display 200.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified. The scope of the invention is defined by the appended claims.

## Claims

1. A method of operating a terminal (100) in communication with a head mounted display (200), the method comprising:
determining (S501) whether a rotation state of the terminal (100) corresponds to a landscape mode or a portrait mode;
receiving (S505), an input for displaying an input interface on the head mounted display (200); and
controlling the head mounted display 200 to display an input interface based on the determined rotation state and the received input,
**characterized in that** the step of controlling the head mounted display comprises:
when the received input is a single-touch input received via a touchscreen (151) of the terminal (100) and the determined rotation state is the portrait mode, controlling the head mounted display (200) to display a reduced-type keypad interface; and
when the received input is a multi-touch input received via the touchscreen (151) and the determined rotation state is the landscape mode, controlling the head mounted display (200) to display a keypad interface which is larger in size than the size of the reduced-type keypad interface.

2. The method of claim 1, wherein the large-size keypad interface comprises a QWERTY keyboard interface.

3. The method of claim 1, wherein the reduced-type keypad interface comprises a matrix keyboard interface.

4. The method of claim 1, further comprising:
receiving an input for inputting text based on the input interface displayed on the head mounted display (200); and
transmitting a signal comprising the input text to the head mounted display (200).

5. The method of claim 4, wherein the received input for inputting text comprises a touch to a location at the terminal (100) corresponding to a location at the input interface displayed on the head mounted display (200), wherein the location at the input interface corresponds to a selected text to be input.

6. A terminal (100) in communication with a head mounted display (200), the terminal (100) comprising:
a touchscreen (151);
a sensor (140) configured to sense a rotation orientation of the terminal (100); and
a controller (180) configured to:
determine whether the rotation state corresponds to a landscape mode or a portrait mode based on the rotation orientation sensed by the sensor (140);
receive an input for displaying an input interface on the head mounted display (200); and
control the head mounted display (200) to display an input interface based on the determined rotation state and the received input,
**characterized in that** the controller (180) is further configured to:
when the received input is a single-touch input received via the touchscreen (151) and the determined rotation state is the portrait mode, control the head mounted display (200) to display a reduced-type keypad interface; and
when the received input is a multi-touch input received via the touchscreen (151) and the determined rotation state is the landscape mode, control the head mounted display (200) to display a keypad interface which is larger in size than the size of the reduced-type keypad interface.

7. The terminal of claim 6, further comprising a communication unit (110), wherein the controller (180) is further configured to:
control the communication unit (110) to transmit a control signal to the head mounted display (200) for displaying the input interface.

8. The terminal of claim 6, wherein the large-size keypad interface comprises a QWERTY keyboard interface.

9. The terminal of claim 6, wherein the reduced-type keypad interface comprises a matrix keyboard interface.

10. The terminal of claim 6, further comprising a communication unit (110), wherein the controller (180) is further configured to:
receive an input for inputting text based on the input interface displayed on the head mounted display (200); and
control the communication unit (110) to transmit a signal comprising the input text to the head mounted display (200).

11. The terminal of claim 6, wherein the received input for inputting text comprises a touch to a location at the terminal (100) corresponding to a location at the input interface displayed on the head mounted display (200), wherein the location at the input interface corresponds to a selected text to be input.

12. The terminal of claim 6, wherein the controller (180) is further configured to:
receive an input for switching the input interface to the other input interface; and
control the head mounted display (200) to switch the input interface to the other input interface.

## Patentansprüche

1. Verfahren zum Betreiben eines sich in Verbindung mit einem Head-Mounted Display (200) befindenden Endgeräts (100), wobei das Verfahren umfasst:
Feststellen (S501), ob ein Drehzustand des Endgeräts (100) einem Breitformatmodus oder einem Hochformatmodus entspricht,
Empfangen (S505) einer Eingabe zum Anzeigen einer Eingabeschnittstelle auf dem Head-Mounted Display (200), und
Steuern des Head-Mounted Displays (200) zum Anzeigen einer Eingabeschnittstelle basierend auf dem festgestellten Drehzustand und der empfangenen Eingabe,
**dadurch gekennzeichnet, dass** der Schritt des Steuerns des Head-Mounted Displays umfasst:
wenn die empfangene Eingabe eine über einen Berührungsbildschirm (151) des Endgeräts (100) empfangene Einfachberührungs-Eingabe ist und der ermittelte Drehzustand der Hochformatmodus ist, Steuern des Head-Mounted Displays (200) zum Anzeigen einer reduzierten Tastaturschnittstelle, und
wenn die über den Berührungsbildschirm (151) empfangene Eingabe eine Mehrfachberührungs-Eingabe ist und der festgestellte Drehzustand der Breitformatmodus ist, Steuern des Head-Mounted Displays (200) zum Anzeigen einer Tastaturschnittstelle, deren Abmessung größer ist als die Abmessung der reduzierten Tastaturschnittstelle.

2. Verfahren nach Anspruch 1, bei dem die Tastaturschnittstelle größerer Abmessung eine QWERTY-Tastaturschnittstelle umfasst.

3. Verfahren nach Anspruch 1, bei dem die reduzierte Tastaturschnittstelle eine Matrixtastaturschnittstelle umfasst.

4. Verfahren nach Anspruch 1, ferner umfassend:
Empfangen einer Eingabe zum Eingeben von Text basierend auf der auf dem Head-Mounted Display (200) angezeigten Eingabeschnittstelle, und
Übertragen eines den eingegebenen Text enthaltenden Signals an das Head-Mounted Display (200).

5. Verfahren nach Anspruch 4, bei dem die zum Eingeben von Text empfangene Eingabe eine Berührung an einer Stelle an dem Endgerät (100) umfasst, die einer Stelle auf der auf dem Head-Mounted Display (200) angezeigten Eingabeschnittstelle entspricht, wobei die Stelle auf der Eingabeschnittstelle einem ausgewählten Text entspricht, der eingegeben werden soll.

6. Endgerät (100), das sich in Verbindung mit einem Head-Mounted Display (200) befindet, wobei das Endgerät (100) aufweist:
einen Berührungsbildschirm (151),
einen zum Erfassen einer Drehausrichtung des Endgeräts (100) eingerichteten Sensor (140), und
eine Steuereinheit (180), die eingerichtet ist zum:
Feststellen, ob basierend auf der durch den Sensor (140) erfassten Drehausrichtung der Drehzustand einem Breitformatmodus oder einem Hochformatmodus entspricht,
Empfangen einer Eingabe zum Anzeigen einer Eingabeschnittstelle auf dem Head-Mounted Display (200), und
Steuern des Head-Mounted Displays (200) zum Anzeigen einer Eingabeschnittstelle basierend auf dem festgestellten Drehzustand und der empfangenen Eingabe,
**dadurch gekennzeichnet, dass** die Steuereinheit (180) ferner eingerichtet ist zum:
wenn die über den Berührungsbildschirm (151) empfangene Eingabe eine Einfachberührungs-Eingabe ist und der ermittelte Drehzustand der Hochformatmodus ist, Steuern des Head-Mounted Displays (200) zum Anzeigen einer reduzierten Tastaturschnittstelle, und
wenn die über den Berührungsbildschirm (151) empfangene Eingabe eine Mehrfachberührungs-Eingabe ist und der festgestellte Drehzustand der Breitformatmodus ist, Steuern des Head-Mounted Displays (200) zum Anzeigen einer Tastaturschnittstelle, deren Abmessung größer ist als die Abmessung der reduzierten Tastaturschnittstelle.

7. Endgerät nach Anspruch 6, ferner umfassend eine Kommunikationsschnittstelle (110), wobei die Steuereinheit (180) ferner eingerichtet ist zum:
Steuern der Kommunikationsschnittstelle (110) zum Senden eines Steuersignals an das Head-Mounted Display (200) zum Anzeigen der Eingabeschnittstelle.

8. Endgerät nach Anspruch 6, bei dem die Tastaturschnittstelle größerer Abmessung eine QWERTY-Tastaturschnittstelle umfasst.

9. Endgerät nach Anspruch 6, bei dem die reduzierte Tastaturschnittstelle eine Matrixtastaturschnittstelle umfasst.

10. Endgerät nach Anspruch 6, ferner umfassend eine Kommunikationseinheit (110), wobei die Steuereinheit (180) ferner eingerichtet ist zum:
Empfangen einer Eingabe zum Eingeben von Text basierend auf der auf dem Head-Mounted Display (200) angezeigten Eingabeschnittstelle, und
Steuern der Kommunikationseinheit (110) zum Senden eines den Eingabetext enthaltenen Signals an das Head-Mounted Display (200).

11. Endgerät nach Anspruch 6, bei dem die empfangene Eingabe zum Eingeben von Text eine Berührung an einer Stelle an dem Endgerät (100) umfasst, die einer Stelle der auf dem Head-Mounted Display (200) angezeigten Eingabeschnittstelle entspricht, wobei die Stelle auf der Eingabeschnittstelle einem ausgewählten Text entspricht, der eingegeben werden soll.

12. Endgerät nach Anspruch 6, bei dem die Steuereinheit (180) ferner eingerichtet ist zum:
Empfangen einer Eingabe zum Umschalten der Eingabeschnittstelle auf die andere Eingabeschnittstelle, und
Steuern des Head-Mounted Displays (200) zum Umschalten der Eingabeschnittstelle auf die andere Eingabeschnittstelle.

## Revendications

1. Procédé de fonctionnement d'un terminal (100) en communication avec un visiocasque (200), le procédé consistant à :
déterminer (S501) si un état de rotation du terminal (100) correspond à un mode paysage ou à un mode portrait ;
recevoir (S505), une entrée pour afficher une interface d'entrée sur le visiocasque (200) ; et
amener le visiocasque (200) à afficher une interface d'entrée en fonction de l'état de rotation déterminé et l'entrée de réception
**caractérisé en ce que** l'étape de commande du visiocasque consistant à :
lorsque l'entrée reçue est une entrée tactile unique reçue par l'intermédiaire d'un écran tactile (151) du terminal (100) et que l'état de rotation déterminé est le mode portrait, amener le visiocasque (200) à afficher une interface clavier de taille réduite ; et
lorsque l'entrée reçue est une entrée tactile multiple reçue par l'intermédiaire d'un écran tactile (151) du terminal (100) et que l'état de rotation déterminé est le mode paysage, amener le visiocasque (200) à afficher une interface clavier dont la taille est supérieur à celle de l'interface clavier de taille réduite.

2. Procédé selon la revendication 1, l'interface clavier de grande taille comprenant une interface clavier QWERTY.

3. Procédé selon la revendication 1, l'interface clavier de taille réduite comprenant une interface clavier de matrice.

4. Procédé selon la revendication 1, consistant en outre à :
recevoir une entrée pour saisir le texte en fonction de l'interface d'entrée affichée sur le visiocasque (200) ; et
transmettre un signal comprenant le texte saisi au visiocasque (200).

5. Procédé selon la revendication 4, l'entrée reçue pour saisir le texte comprenant une tape sur un emplacement sur le terminal (100) correspondant à un emplacement sur l'interface d'entrée affichée sur le visiocasque (200), l'emplacement sur le visiocasque correspondant à un texte sélectionné à saisir.

6. Terminal (100) en communication avec un visiocasque (200), le terminal (100) comprenant :
un écran tactile (151) ;
un capteur (140) conçu pour détecter un sens de rotation du terminal (100) ; et
un organe de commande (180) conçu pour :
déterminer si l'état de rotation correspond à un mode paysage ou un mode portrait en fonction du sens de rotation détectée par le capteur (140) ;
recevoir une entrée pour afficher une interface d'entrée sur le visiocasque (200) ; et
amener le visiocasque (200) à afficher une interface d'entrée en fonction de l'état de rotation déterminé et l'entrée reçue,
**caractérisé en ce que** l'organe de commande (180) étant en outre conçu pour :
lorsque l'entrée reçue est une entrée tactile unique reçue par l'intermédiaire de l'écran tactile (151) et que l'état de rotation déterminé est le mode portrait, amener le visiocasque (200) à afficher une interface clavier de taille réduite ; et
lorsque l'entrée reçue est une entrée tactile multiple reçue par l'intermédiaire de l'écran tactile (151) et que l'état de rotation déterminé est le mode paysage dont la taille est supérieure à celle de l'interface clavier de taille réduite.

7. Terminal selon la revendication 6, comprenant en outre une unité de communication (110), l'organe de commande (180) étant en outre conçu pour :
amener l'unité de communication (110) à transmettre un signal de commande au visiocasque (200) pour afficher l'interface d'entrée.

8. Terminal selon la revendication 6, l'interface clavier de grande taille comprenant une interface clavier QWERTY.

9. Terminal selon la revendication 6, l'interface clavier de taille réduite comprenant une interface clavier de matrice.

10. Terminal selon la revendication 6, comprenant en outre une unité de communication (110), l'organe de commande (180) étant en outre conçu pour :
recevoir une entrée pour saisir le texte sur l'interface d'entrée affichée sur le visiocasque (200) ; et
amener l'unité de communication (110) à transmettre un signal comprenant le texte d'entrée au visiocasque (200).

11. Terminal selon la revendication 6, l'entrée reçue pour saisir le texte comprenant une tape dans un emplacement dans le terminal (100) correspondant à un emplacement dans l'interface d'entrée affiché sur le visiocasque (200), l'emplacement sur le visiocasque correspondant à un texte sélectionné à saisir.

12. Terminal selon la revendication 6, l'organe de commande (180) étant en outre conçu pour :
recevoir une entrée pour passer de l'interface d'entrée à une autre interface d'entrée ; et
amener le visiocasque (200) à passer de l'interface d'entrée à l'autre interface d'entrée.
